Europäisches Patentamt

European Patent Office

Office européen des brevets

(19)

(11) Numéro de publication : **0 050 546**
**B1**

(12) **FASCICULE DE BREVET EUROPÉEN**

(45) Date de publication du fascicule du brevet :
**11.04.84**

(51) Int. Cl.³ : **H 04 N   3/06, H 04 N   5/33**

(21) Numéro de dépôt : **81401544.2**

(22) Date de dépôt : **06.10.81**

(54) **Dispositif opto-électronique d'analyse d'images vidéo-fréquence par balayage rotatif.**

(30) Priorité : **17.10.80 FR 8022275**

(43) Date de publication de la demande :
**28.04.82 Bulletin 82/17**

(45) Mention de la délivrance du brevet :
**11.04.84 Bulletin 84/15**

(84) Etats contractants désignés :
**DE GB SE**

(56) Documents cités :
**FR-A- 2 363 084**

(73) Titulaire : **THOMSON-CSF**
**173, Boulevard Haussmann**
**F-75379 Paris Cedex 08 (FR)**

(72) Inventeur : **Beck, Jean-Louis**
**THOMSON-CSF SCPI 173, bld Haussmann**
**F-75360 Paris Cedex 08 (FR)**
Inventeur : **Le Bars, Jean-François**
**THOMSON-CSF SCPI 173, bld Haussmann**
**F-75360 Paris Cedex 08 (FR)**
Inventeur : **Emmanuelli, Yves-Antoine**
**THOMSON-CSF SCPI 173, bld Haussmann**
**F-75360 Paris Cedex 08 (FR)**
Inventeur : **Bargues, Denis**
**THOMSON-CSF SCPI 173, bld Haussmann**
**F-75360 Paris Cedex 08 (FR)**

(74) Mandataire : **Trocellier, Roger et al**
**THOMSON-CSF SCPI 173, Bld Haussmann**
**F-75379 Paris Cedex 08 (FR)**

EP 0 050 546 B1

Jouve, 18, rue St-Denis, 75001 Paris, France

## Dispositif opto-électronique d'analyse d'images vidéo-fréquence par balayage rotatif

La présente invention a pour objet un dispositif opto-électronique d'analyse d'une image vidéo-fréquence par balayage rotatif.

Il est connu du brevet français 2.363.084 un dispositif opto-électronique d'analyse d'images vidéo-fréquence comportant des moyens de réception optique, des éléments optiques entraînés en rotation de manière à produire un balayage d'image, une optique de focalisation sur un dispositif de détection comprenant un réseau de détecteurs et des circuits de traitement des signaux vidéo-fréquence des détecteurs. Il comporte un miroir à facettes multiples solidaire du rotor d'un gyroscope, ce rotor étant monté dans une suspension à la cardan, de manière que, lorsque chaque facette tourne en passant par le trajet optique d'une optique réceptrice, un dispositif détecteur est balayé optiquement dans le champ de vision selon une première dimension. Un balayage selon une deuxième dimension orthogonale est réalisé soit en inclinant chaque facette réfléchissante d'un angle différent sur l'axe de rotation du rotor, soit en disposant dans le trajet optique un miroir entraîné en rotation. Un tel dispositif a pour inconvénient un repliement excessif des rayons lumineux, et des excentrements de pièces nocifs à la stabilisation de l'ensemble lorsqu'il est incorporé à une tête stabilisée par gyroscope.

La présente invention a pour objet un dispositif opto-électronique d'analyse d'images vidéo-fréquence permettant d'éviter des repliements optiques et des déports mécaniques excessifs.

Un dispositif opto-électronique d'analyse d'images vidéo-fréquence selon l'invention comporte des éléments optiques entraînés en rotation de manière à produire un balayage d'image, une optique de focalisation sur un dispositif de détection comprenant un réseau de détecteurs et des moyens de traitement des signaux vidéo-fréquence des détecteurs. Il est caractérisé en ce que les éléments optiques entraînés en rotation consistent en un système afocal comprenant au moins deux éléments optiques cylindriques entraînés solidairement en rotation autour d'un axe perpendiculaire à leurs génératrices et définissant l'axe optique du dispositif, et en ce que le réseau de détecteurs comprend une pluralité de détecteurs s'étendant depuis ledit axe. L'image est ainsi analysée en faisant tourner le champ à analyser devant au moins un réseau de détecteurs photo-sensibles autour d'un détecteur situé sur ledit axe et correspondant au centre du champ.

Suivant un mode de réalisation de l'invention, les deux éléments optiques cylindriques ont leurs distances focales égales.

Suivant un mode de réalisation de l'invention, lesdits éléments optiques cylindriques sont deux lentilles cylindriques de génératrices parallèles.

Selon un autre mode de réalisation, les éléments optiques cylindriques sont constitués par un miroir cylindrique et des lentilles cylindriques dont les génératrices sont orthogonales.

Selon un mode de réalisation de l'invention, le dispositif suivant l'invention est incorporé à une tête stabilisée par gyroscope comprenant une suspension à la cardan, un stator mobile autour des deux axes de la suspension à la cardan et un rotor tournant par rapport au stator suivant un axe de rotation définissant un axe de visée qui est l'axe optique du dispositif. On utilise directement le mouvement rotatif du gyroscope en rendant les éléments optiques cylindriques solidaires du rotor. Le dispositif de détection est, soit solidaire du stator, soit découplé de celui-ci et asservi à rester d'axe parallèle à l'axe de rotation du rotor.

Suivant un mode de réalisation de l'invention, les moyens de traitement des signaux vidéo-fréquence des détecteurs comportent un circuit de multiplexage des signaux fournis par le réseau de détecteurs, un circuit de transcription et de synchronisation faisant correspondre séquentiellement à chaque paire de coordonnées polaires, une paire de coordonnées cartésiennes, et une mémoire recevant séquentiellement les valeurs mesurées et leurs adresses suivant lesdites coordonnées cartésiennes.

Selon un mode de réalisation de l'invention, les moyens vidéo-fréquence de traitement des signaux des détecteurs comportent une mémoire de stockage des valeurs mesurées des signaux fournis dans des conditions de référence par chaque détecteur et amplifiés par un circuit d'amplification, et un circuit soustracteur qui retranche lesdites valeurs mesurées à celles correspondant à une détection d'images.

Selon un mode de réalisation de l'invention, les moyens vidéo-fréquence du traitement des signaux détectés comportent un circuit moyenneur recevant les tensions représentatives des signaux fournis par chaque détecteur et produisant à sa sortie la valeur moyenne de ceux-ci, et un soustracteur qui retranche ladite valeur moyenne, de chaque tension représentative des signaux fournis par chaque détecteur.

Selon un mode de réalisation de l'invention, le réseau de détecteurs comporte une barrette de détecteurs de pas et de dimensions différentes.

L'invention sera mieux comprise par référence aux dessins ci-annexés et où :

la figure 1 représente un schéma illustrant l'invention ;

les figures 2a et 2b représentent les coupes d'un dispositif à deux lentilles cylindriques respectivement par les plans xoy et xoz ;

les figures 3a et 3b sont des schémas illustrant un balayage rotatif ;

la figure 4 représente un diagramme du déplacement angulaire lors de la rotation des deux éléments optiques cylindriques ;

les figures 5a, 5b, 6a, 7a et 7b représentent des modes de réalisations de l'invention comportant une optique de renvoi réalisant un repliement du faisceau lumineux incident ;

les figures 8 et 9 représentent un dispositif suivant l'invention intégré dans un auto-directeur pourvu d'une suspension à la cardan, respectivement intérieure et extérieure ;

la figure 10 représente un schéma général des moyens de traitement des signaux vidéo-fréquence des détecteurs ;

la figure 11 représente un bloc de multiplexage et de correction des tensions résiduelles ;

la figure 12 représente un schéma d'un circuit moyenneur ;

la figure 13 représente un mode de réalisation du circuit moyenneur représenté à la figure 12 ;

les figures 14a et 14b sont représentatives de l'action d'un circuit moyenneur sur des signaux de sortie des détecteurs ;

les figures 15a et 15b représentent des variantes de réalisation du dispositif de détection suivant l'invention ;

la figure 16 représente une variante des figures 8 et 9 où le dispositif de détection est découplé du stator d'un gyroscope.

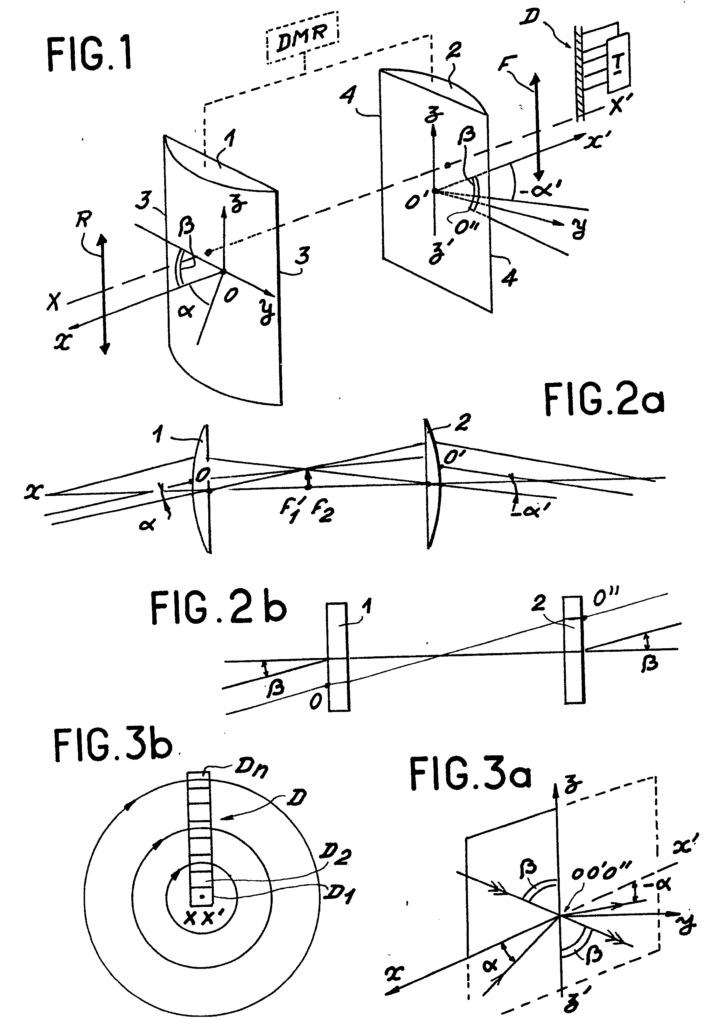

La figure 1, représente deux éléments optiques cylindriques 1 et 2, à savoir deux lentilles cylindriques comportant respectivement des génératrices 3 et 4. Les deux éléments optiques cylindriques 1 et 2 sont entraînés solidairement en rotation par l'intermédiaire d'un dispositif DMR. Cette rotation se produit autour d'un axe XX' perpendiculaire à la direction des génératrices 3 et 4. Une optique de focalisation F disposée en aval focalise les rayons sortant de l'élément cylindrique 2 sur un réseau de détecteurs D disposé dans son plan focal et comprenant une pluralité de détecteurs s'étendant depuis l'axe optique XX' du dispositif. Les rayons lumineux correspondant à l'image analysée sont introduits à l'entrée de l'élément optique cylindrique 1 éventuellement par l'intermédiaire de moyens de réception optiques R consistant par exemple en un dôme de réception et/ou en une optique de renvoi. Comme on va le montrer maintenant, la mise en rotation solidaire des éléments optiques cylindriques 1 et 2 va produire un balayage rotatif de l'image sur le réseau de détecteurs D. Des moyens vidéo-fréquence de traitement T des signaux de détecteurs sont associés aux détecteurs du réseau de détecteurs D.

Sur la figure 1, on a également figuré deux rayons lumineux incidents en un point O sur l'élément optique cylindrique 1. Ces deux rayons lumineux font respectivement des angles $\alpha$ et $\beta$ avec l'axe XX'. Le rayon qui fait un angle $\alpha$ avec l'axe XX' est situé dans un plan xOy perpendiculaire aux génératrices 3 de l'élément 1. Le rayon qui fait un angle $\beta$ avec l'axe XX' est situé dans un plan xOz parallèle aux génératrices 3.

La figure 2a est une coupe dans le plan xOy, où les éléments optiques cylindriques qui sont, dans le cas envisagé, des lentilles cylindriques, sont assimilables à des lentilles convergentes. Les deux foyers des lentilles représentés sur la figure 2a sont confondus, de manière à réaliser un système afocal et le rayon sortant de la lentille 2 fera avec celle-ci un angle $-\alpha'$ défini par la relation :

$$tg\alpha' = (f'_1/f_2)\ tg\alpha$$

où $f'_1$ et $f_2$ sont les distances focales respectives de la lentille 1 et de la lentille 2.

Dans le cas particulier où ces distances focales sont égales, on aura $\alpha' = -\alpha$.

La figure 2b représente une coupe par un plan passant par O et parallèle aux génératrices à savoir le plan xOz. Dans ce plan ou tout plan parallèle aux génératrices, les lentilles 1 et 2 sont des lames à faces parallèles, et par conséquent tout rayon incident suivant un angle $\beta$ par rapport à l'axe Ox ressortira également avec un angle $\beta$. A la figure 1, on a figuré le rayon sortant correspondant.

Par référence la figure 3a où les points O, O' et O'' ont été par convention représentés confondus, on a figuré les déviations angulaires de chacun des rayons incidents précités, au cas où les distances focales les lentilles 1 et 2 sont égales.

Du point de vue angulaire, les déviations reviennent au produit d'une symétrie par rapport à un point, par une symétrie par rapport à un plan, ledit plan contenant les axes XX' et zz', c'est-à-dire un plan parallèle à l'axe de rotation XX' des éléments optiques cylindriques et à leurs génératrices, et tout se passe donc comme si un miroir fictif était situé dans le plan xOz.

Il en résulte qu'à tout rayon incident à l'entrée de la lentille 1 correspondra, à la sortie de la lentille 2, un rayon animé d'un mouvement de rotation doublé par rapport à celui du mouvement de rotation des lentilles 1 et 2 autour de l'axe XX'. Une rotation de 90° des lentilles cylindriques, correspondra à une rotation de 180° de l'image autour du détecteur.

La figure 3b représente le balayage circulaire obtenu lorsque les distances focales des deux lentilles sont égales. Un réseau de détecteurs ($D_1$, $D_2$, ... $D_n$) régulièrement espacés et s'étendant à partir de l'axe XX' dont la trace correspond à un détecteur $D_1$ d'extrémité du réseau sera balayé par la rotation de l'image.

Au cas où les distances focales des deux lentilles ne sont pas les mêmes, les cercles décrits par les images des différents points objets ne sont pas concentriques.

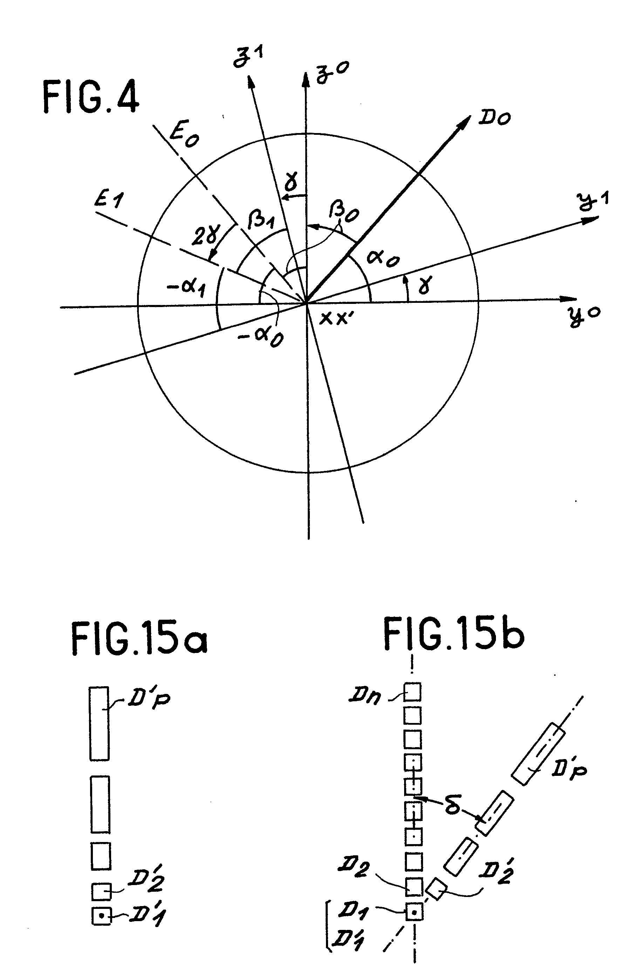

La figure 4 représente un diagramme des déviations angulaires lorsque les éléments optiques cylindriques tournent d'un angle $\gamma \cdot z_0$ représente un axe parallèle aux génératrices des lentilles cylindriques et $y_0$ un axe perpendiculaire à l'axe $z_0$ et situé dans un plan parallèle aux génératrices. Après rotation d'un angle $\gamma$, ces axes deviennent respectivement $y_1$ et $z_1$. On a représenté par $D_0$ la direction d'un objet faisant un angle $\gamma_0$ avec l'axe $y_0$ et un angle $\beta_0$ avec l'axe $z_0$. La direction émergente $E_0$ du faisceau incident avant rotation est la symétrique de la direction $D_0$ par rapport à l'axe $z_0$. La direction émergente $E_1$ du faisceau incident après rotation des axes d'un angle $\gamma$ fait un angle $2\gamma$ avec $E_0$. La direction $E_1$ fait un angle $\beta_1$ avec l'axe $z_1$, et on a :

$$\beta_1 = \beta_0 + \gamma.$$

Pour une vitesse de rotation des éléments optiques cylindriques égale à $\omega$, la vitesse angulaire d'analyse de l'image sera égale à $2\omega$.

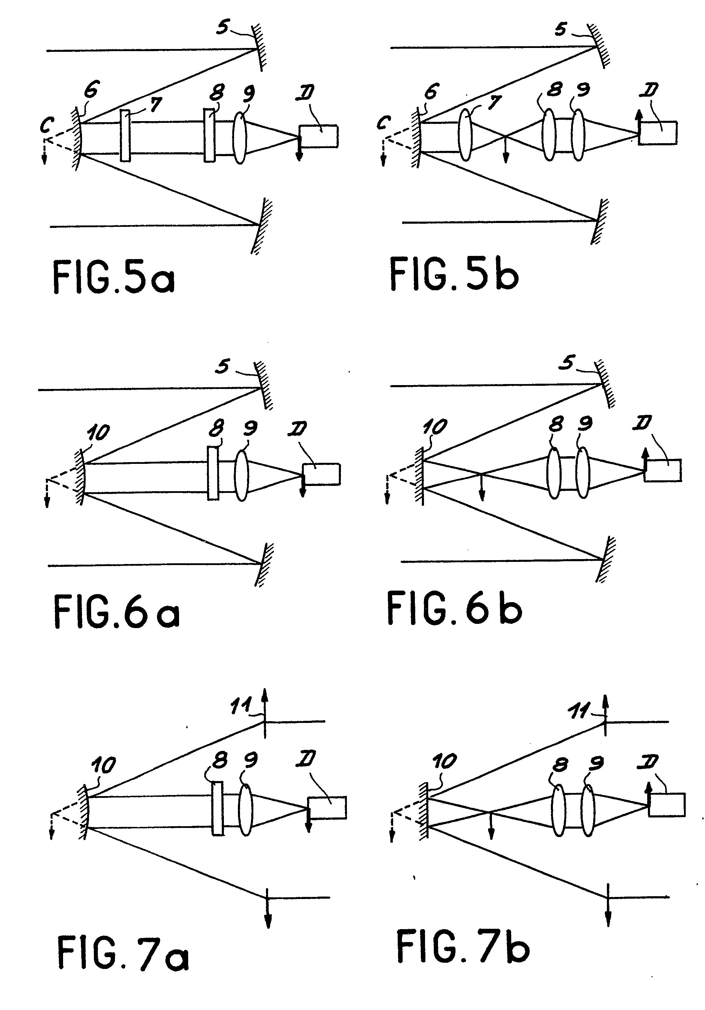

Les figures 5a et 5b illustrent un mode de réalisation où les rayons lumineux incidents sont renvoyés à l'entrée d'un groupe de deux lentilles cylindriques 7 et 8, par l'intermédiaire d'un dispositif de repliements de faisceaux du type Cassegrain qui comporte un miroir principal 5 pourvu d'une ouverture axiale et un miroir secondaire 6. Une lentille convergente 9 focalise les rayons lumineux sortant de la lentille cylindrique 8 sur le détecteur D. L'axe passant par le centre du miroir sphérique 6 et perpendiculaire aux génératrices des lentilles cylindriques 7 et 8 définit l'axe optique du système.

Sur la figure 5a, qui est une coupe du système par un plan parallèle aux génératrices des lentilles 7 et 8, on a représenté un faisceau parallèle à l'axe optique du système et qui est transformé par l'ensemble des miroirs 5 et 6 en un faisceau parallèle à l'axe optique du système.

Comme, dans le plan parallèle aux génératrices, les lentilles cylindriques 7 et 8 sont assimilables à des lames à faces parallèles, le faisceau parallèle sera focalisé sur les détecteurs par la lentille convergente 9. On aura donc une image virtuelle au centre du miroir sphérique 6 et une image réelle de même sens focalisée sur les détecteurs.

Sur la figure 5b qui est une coupe par un plan perpendiculaire aux génératrices des lentilles cylindriques 7 et 8, le faisceau parallèle à l'axe optique est également renvoyé par l'ensemble des miroirs 5 et 6 sous forme de rayons parallèles. La lentille cylindrique 7, qui, dans ce plan, est assimilable à une lentille convergente, va focaliser ces rayons dans son plan focal, et la lentille cylindrique 8 va retransformer les rayons en un faisceau parallèle à l'axe optique qui sera repris par la lentille convergente 9 et focalisée sur le réseau de détecteurs D. On aura donc une image virtuelle au centre C du miroir sphérique 6, une image réelle de même sens à distance égale à la distance focale de la lentille 7, et une image réelle de sens contraire au niveau du détecteur.

Les figures 6a et 6b représentent une variante des figures 5a et 5b où on substitue au miroir sphérique 6 et à la lentille cylindrique 7 un miroir cylindrique 10 dont les génératrices sont perpendiculaires aux génératrices de la lentille cylindrique 8.

Sur la figure 6a qui est une coupe par un plan parallèle aux génératrices de la lentille cylindrique 8, un faisceau parallèle à l'axe optique du système est renvoyé selon un faisceau parallèle par le miroir cylindrique 10, qui, dans ce plan, est assimilable à un miroir sphérique. Le faisceau parallèle est repris par la lentille cylindrique 8 qui, dans ce plan, est assimilable à une lame à faces parallèles, et ensuite focalisée sur le réseau de détecteurs D par la lentille convergente 9. On a donc, dans ce plan, une image virtuelle au niveau d'un point correspondant au centre du miroir cylindrique 10, et une image réelle au niveau du réseau de détecteurs et de même sens que l'autre.

Sur la figure 6b qui est une coupe par un plan perpendiculaire aux génératrices la lentille cylindrique 8, un faisceau parallèle à l'axe optique du système est renvoyé par la lentille cylindrique 10 qui, dans ce plan, est assimilable à un miroir plan. Ce faisceau converge dans un plan correspondant au foyer de la lentille cylindrique 8 qui, dans ce plan, est assimilable à une lentille convergente et forme à la sortie de celle-ci un faisceau parallèle qui est repris par la lentille convergente 9 et focalisé sur le réseau de détecteurs D. On a donc une image virtuelle située à un point symétrique du foyer de la lentille cylindrique 8 par rapport à la trace du miroir cylindrique 10, une image réelle de même sens au foyer de la lentille cylindrique 8, et une image réelle de sens contraire au niveau des détecteurs.

Les figures 7a et 7b sont des variantes des figures 6a et 6b, où le miroir principal 5 est remplacé par une lentille convergente 11 pourvue d'une ouverture axiale. Les schémas optiques représentés correspondent à ceux de la figure 6a et 6b. Une telle substitution est bien entendu également possible dans le cas des figures 5a et 5b.

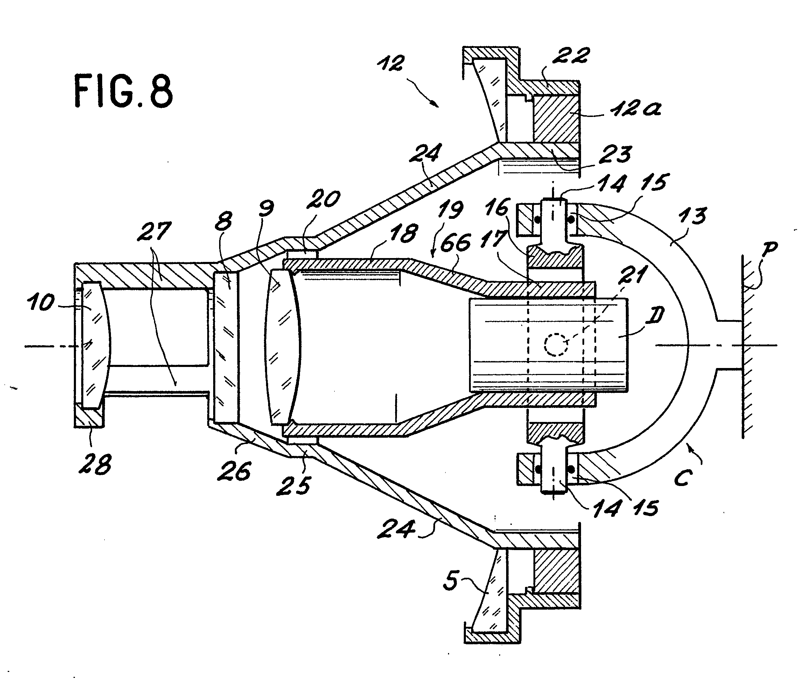

La figure 8 représente un dispositif suivant l'invention incorporé à une tête stabilisée par gyroscope. Le gyroscope comprend une suspension à la cardan désignée par le repère général C, un stator 19 mobile autour des deux axes 14 et 21 de la suspension C, et un rotor représenté par le repère général 12.

La suspension à la cardan C comporte un étrier 13 qui est fixé à un plan de référence P. L'étrier 13 porte un premier axe de cardan 14 en deux parties, tournant sur des roulements 15. Une couronne 16 solidaire de l'axe 14 porte un deuxième axe de cardan 21, également en deux parties, qui est perpendiculaire au premier et mobile autour de la couronne par l'intermédiaire de roulements non représentés. L'axe 21 est solidaire du stator 19 au niveau du support 17. Le support 17 maintient un boîtier de détecteurs représenté par le repère général D. Le stator 19 se compose aussi d'un support 17, et d'une partie cylindrique avant 18 reliée par un cône de raccordement 66. Une lentille convergente 9 est sertie à l'extrémité de la partie cylindrique 18.

Le rotor, représenté par le repère général 12, tourne autour du stator par l'intermédiaire de roulements 20 disposés à l'extérieur de la partie cylindrique avant 18. Ce rotor se compose d'une toupie 12a et d'un miroir principal 5 disposé à l'extérieur du cardan C. Ils sont rendus solidaires d'une pièce de couplage 23 de forme généralement cylindrique, par l'intermédiaire d'un ensemble de retenue 22. La pièce de couplage 23 se prolonge par un cône de raccordement 24 jusqu'à un profil cylindrique 25 coopérant avec le roulement 20. Le profil cylindrique 25 se prolonge par un cône de raccordement 26 qui porte à son extrémité une lentille cylindrique 8. Le cône de raccordement 26 se prolonge par des bras de support 27 qui portent un miroir cylindrique 10, grâce à une bague de sertissage 28.

L'ensemble définit un système optique dont l'axe optique est confondu avec l'axe du roulement 20. Lorsque la direction du plan de référence P est amenée à changer, l'ensemble optique reste toujours aligné avec l'axe défini par la rotation du gyroscope.

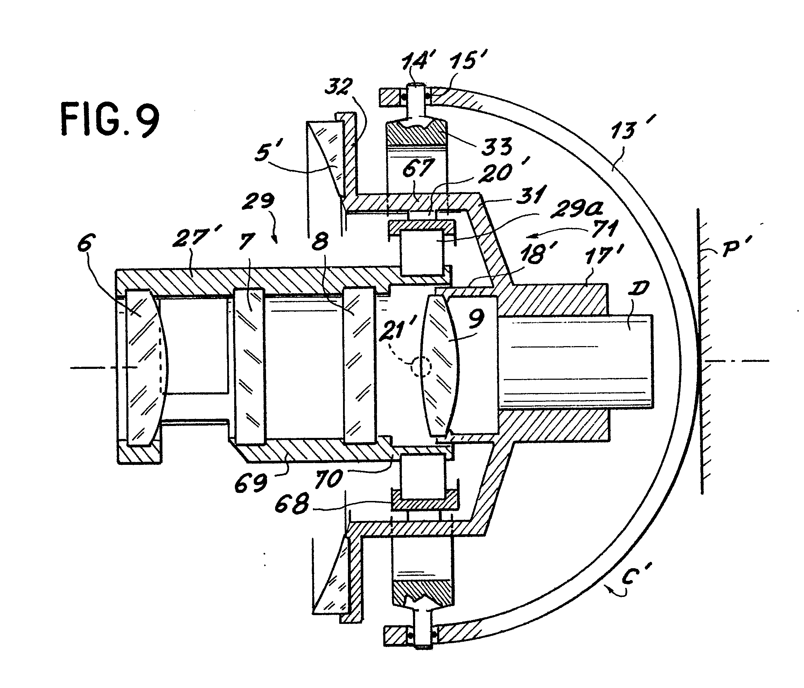

La figure 9 est une variante de la figure 8 où la suspension à la cardan C' est externe et où le miroir principal est solidaire du stator du gyroscope. Le cardan C' est pourvu d'un étrier 13' solidaire d'un plan de référence P'. Un axe 14' en deux parties est porté par l'étrier 13' et est mobile en rotation par l'intermédiaire d'un roulement 15'. Une couronne 33 solidaire de l'axe 14' porte un axe 21' en deux parties. Cet axe 21' perpendiculaire à l'axe 14' est mobile en rotation autour de la couronne 33 par l'intermédiaire d'un rouleau non représenté. L'axe 21' en deux parties est solidaire, par l'intermédiaire d'une partie cylindrique 67, d'un stator représenté par le repère général 71. La partie cylindrique 67 se prolonge vers l'arrière par un cône de raccordement 31 et un support 17' solidaire d'un réseau de détecteurs D. Le support 17' comporte également une surface de raccordement 18' portant la lentille convergente 9. La surface cylindrique 67 se prolonge également vers l'avant par une pièce de retenue 32 portant un miroir principal 5' définissant avec le miroir 6 un système dit Cassegrain.

Le rotor représenté par le repère général 29 est mis en rotation au niveau de la partie cylindrique 67 sur un roulement 20'. La toupie 29a du rotor 29 porte à sa partie extérieure un ensemble 68 de retenue coopérant avec le rouleau 20'. La toupie 29a est portée par le prolongement 70 d'un tube de sertissage 69 qui porte les lentilles cylindriques 7 et 8. Le miroir sphérique 6 est porté par des bras de support 27' solidaires du tube de sertissage 69.

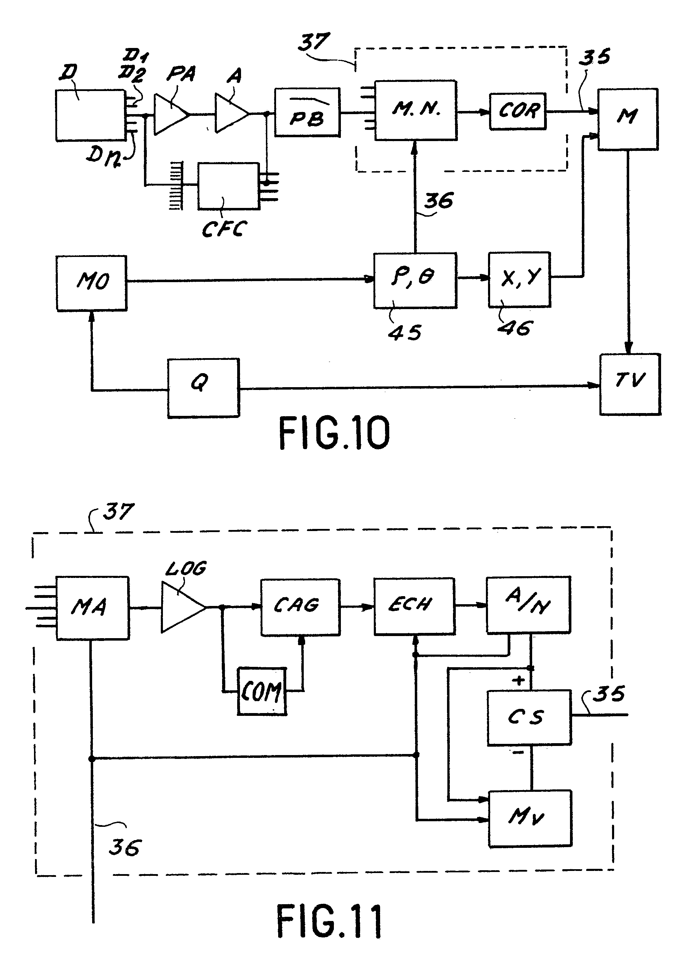

La figure 10 représente un·ensemble électronique de traitement vidéo-fréquence des signaux des détecteurs. A chaque détecteur, est associé un circuit d'amplification composé d'un pré-amplificateur PA et d'un amplificateur A, un correcteur de fond continu CFC qui supprime les composantes continues des signaux de mesure et un filtre passe-bas PB, destiné à limiter la bande passante donc à améliorer le rapport signal/bruit.

De par les propriétés du balayage rotatif, la bande passante peut être d'autant plus étroite pour un détecteur donné, qu'il se situe plus près du centre du champ qui est situé sur l'axe de rotation.

Les tensions amplifiées et filtrées sont introduites dans un bloc de multiplexage et de correction 37. Ce bloc comporte un circuit de multiplexage et codage numérique MN et un circuit de correction de tensions résiduelles COR. Une ligne bus 35 introduit séquentiellement les valeurs mesurées dans une mémoire M. L'échantillonnage des signaux est synchronisé par exemple à partir d'un quartz Q qui pilote un moteur M0 entraînant en rotation les éléments optiques d'une manière connue en soi. L'image à analyser est divisée en un certain nombre de secteurs angulaires dont l'angle d'ouverture correspond à l'angle de rotation du champ optique pendant le temps choisi pour réaliser le multiplexage des signaux des n détecteurs. Des signaux de synchronisation sont introduits dans un séquenceur de coordonnées polaires $\rho$ et $\theta$ représenté par le repère 45 et relié par une ligne 36 au circuit de multiplexage et codage numérique MN. A une paire de coordonnées polaires $\rho$ et $\theta$, représentant une position donnée des éléments optiques en rotation qui est, en première approximation, supposée constante pendant le multiplexage des signaux des n détecteurs, correspond une paire de coordonnées cartésiennes X et Y. Un transcripteur XY repéré en 46 assure la correspondance entre les coordonnées polaires et cartésiennes, et introduit les valeurs correspondantes des coordonnées cartésiennes dans la mémoire M en réponse à une commande fournie par la synchronisation précitée et correspondant au commencement d'un nouveau multiplexage des n détecteurs. Les valeurs mesurées seront ainsi mises en mémoire ligne par ligne et image par image selon un tableau correspondant à des coordonnées cartésiennes. Une unité de traitement vidéo TV synchronisée, de préférence par le quartz Q, génèrera séquentiellement des images de télévision ligne par ligne.

Un mode de réalisation du bloc de multiplexage et de correction 37 est représenté à la figure 11. Il comporte :

— un circuit de multiplexage analogique MA recevant à son entrée un signal amplifié fourni par les détecteurs ;

— un amplificateur logarithmique LOG qui a pour fonction de réaliser une compression des signaux correspondants à des objets très lumineux de manière à éviter la saturation ;

— un circuit de contrôle automatique de gain CAG recevant, par l'intermédiaire d'un circuit de commande COM, des signaux de contrôle à partir de la sortie des amplificateurs logarithmiques LOG ;

— un circuit d'échantillonnage ECH lisant par échantillonnage les signaux provenant de circuits de contrôle automatique de gain CAG et les introduisant séquentiellement dans un convertisseur analogique numérique A/N ;

— un circuit soustracteur CS recevant à son entrée les signaux de sortie du convertisseur analogique numérique A/N et des signaux mémorisés dans une mémoire $M_v$ et correspondant aux valeurs des signaux fournis par chaque détecteur dans des conditions de référence ;

— et une synchronisation fournie par une ligne 36 et répartie sur les circuits MA, ECH, A/N et $M_v$.

Le circuit soustracteur CS soustrait séquentiellement à chaque valeur mesurée par chaque détecteur, le contenu de la mémoire $M_v$ relative au détecteur correspondant. Sa fonction, qui va être explicitée ci-dessous, est de permettre une initialisation de tous les détecteurs avant la mise en service des dispositifs, ou à des intervalles de temps définis.

En effet, dans les dispositifs de balayage optique de l'art antérieur, du type ligne par ligne, par exemple tels que décrit dans le brevet français 2.363.084, on présente aux détecteurs, à la fin de chaque balayage correspondant à une image, une mire correspondant à une répartition uniforme du flux lumineux sur tous les détecteurs, et les signaux de chaque détecteur sont corrigés pour chaque balayage d'image en soustrayant à chaque valeur de mesure de chaque détecteur, la valeur mémorisée correspondant à la mire. Cette initialisation réalisée de façon périodique permet d'utiliser des pré-amplificateurs pourvus d'une capacité d'entrée qui retient les composantes continues des signaux. L'initialisation périodique permet de recaler chaque chaîne de mesure avant chaque balayage image, ce qui permet d'éliminer les composantes continues des signaux et de compenser les dérives thermiques notamment du premier étage d'amplification des signaux de chaque détecteur, sans toutefois détériorer la restitution de l'image. Lors d'un balayage d'image, les constantes de temps des entrées des pré-amplificateurs sont à cet effet choisies de telle sorte que des signaux continus ne soient pas affaiblis de plus de 1 % pendant une période de balayage.

L'application d'un tel principe d'initialisation à un dispositif opto-électronique d'analyse d'images par balayage rotatif imposerait qu'une partie de l'image soit perdue, notamment dans la zone centrale.

Le circuit soustracteur CS décrit ci-dessus par référence aux figures 10 et 11 permet d'éviter cet inconvénient.

Une initialisation permettant la suppression des tensions résiduelles correspondant à la dérive notamment thermique des entrées des circuits d'amplification et notamment des pré-amplificateurs des détecteurs est réalisée soit une fois pour toutes lors de la mise en service du dispositif, soit toutes les N images, N étant fonction des dérives tolérées. On réalise une initialisation en soumettant tous les détecteurs à un flux uniforme, par exemple par occultation du système. Les valeurs mesurées par chaque détecteur dans ces conditions prédéterminées sont stockées dans la mémoire $M_v$ et ensuite retranchées aux valeurs de mesure des détecteurs correspondants, qui sont échantillonnées lors d'une détection d'image.

Il va de soi que l'on peut également utiliser pour réaliser l'initialisation mentionnée ci-dessus des dispositifs analogiques connus pour réaliser la fonction mémoire lors de l'initialisation et ensuite mettre en œuvre des amplificateurs et une logique de couplage pour réaliser l'opération de soustraction.

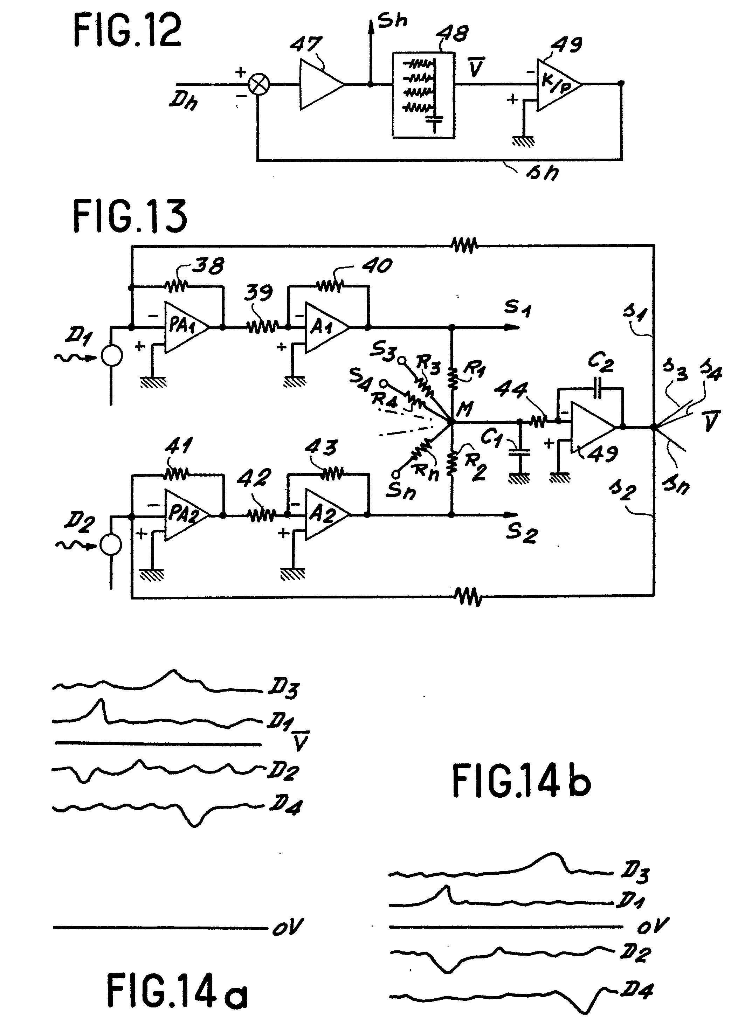

Par référence aux figures 12 à 14, on va maintenant décrire un mode de réalisation du circuit CFC qui retranche la composante continue moyenne de l'ensemble des signaux, disposition particulièrement avantageuse au cas où les détecteurs infra-rouges sont utilisés. En effet, du fait que l'initialisation des détecteurs peut ne pas être réalisée périodiquement, mais une fois pour toutes, il est difficile d'utiliser à cet effet des pré-amplificateurs pourvus d'une capacité d'entrée, étant donné que, si dans l'image apparaît une zone étendue et à contraste faible mais constant, elle ne pourrait produire, lors du balayage et quelle que soit sa luminosité, que des signaux continus qui se trouveraient affaiblis avec une constante de temps prédéterminée, ce qui conduirait à une détérioration et à une perte du contraste de l'image. Selon l'invention, on utilise des pré-amplificateurs dépourvus de capacité d'entrée et on élimine la composante continue moyenne de l'image.

Par référence à la figure 12, un signal correspondant à un détecteur $D_h$ est introduit dans un circuit d'amplification 47. Les signaux sortant de l'amplificateur 47 sont introduits dans un circuit moyenneur 48 qui reçoit également les signaux de tous les autres détecteurs composant le réseau de détecteurs, et produit à sa sortie une valeur moyenne $\bar{V}$. Cette valeur moyenne est injectée dans un amplificateur (49) éventuellement intégrateur dont le signal de sortie $s_h$ est réinjecté en contre-réaction à l'entrée de l'amplificateur 47. Le système asservira la sortie de l'amplificateur 47 référencée $S_h$ à délivrer un signal centré par rapport à la valeur moyenne de tous les signaux.

La figure 13 représente un mode de réalisation du diagramme de la figure 12. Un signal produit par un détecteur $D_1$ est introduit à l'entrée négative d'un pré-amplificateur PA1 qui comporte une résistance de contre-réaction 38. Les signaux en sortie de l'amplificateur PA1 sont introduits dans un amplificateur A1 qui comporte une résistance d'entrée 39, une résistance de contre-réaction 40, ainsi qu'une sortie $S_1$.

Les signaux provenant d'un détecteur $D_2$ sont introduits à l'entrée négative d'un pré-amplificateur PA2 comportant une résistance de contre-réaction 41. Les signaux sortant du pré-amplificateur PA2 sont introduits dans un amplificateur A2 comportant une résistance d'entrée 42 et une résistance de contre-réaction 43 ainsi qu'une sortie $S_2$. Les sorties $S_1$, $S_2$, $S_3$, $S_4$, ... $S_n$, qui correspondent à des chaînes de mesure dont les gains ont été ajustés de manière à correspondre à des gains globalement égaux, sont reliées par l'intermédiaire de résistances de valeurs égales respectivement $R_1$, $R_2$, $R_3$, $R_4$, ... $R_n$ à un point commun M. Entre ce point M et la masse est disposé un condensateur $C_1$. Le point M est relié également à l'entrée négative d'un intégrateur 49 comportant une résistance d'entrée 44 et un condensateur de contre-réaction $C_2$. La sortie de l'intégrateur 49 est reliée, par l'intermédiaire des

liaisons résistives $s_1$, $s_2$, $s_3$, $s_4$, ... $s_n$ aux entrées négatives des pré-amplificateurs correspondant à chacun des détecteurs composant le réseau de détecteurs.

La figure 14a représente des signaux amplifiés fournis par un système à quatre détecteurs $D_1$, $D_2$, $D_3$, $D_4$. On voit que la valeur moyenne se situe à une valeur $\bar{V}$ très différente du niveau 0 volt. La figure 14b représente les signaux correspondant aux détecteurs $D_1$, $D_2$, $D_3$ et $D_4$ lorsqu'on utilise un circuit tel que décrit dans les figures 12 et 13. Les valeurs représentées sont centrées autour de la valeur 0 volt. La composante continue des signaux a été ainsi éliminée sans détériorer l'information continue relative des signaux.

On remarquera que le circuit décrit ci-dessus est réalisé par des techniques analogiques. Il va de soi que les techniques numériques s'inspirant du même schéma rentrent dans le cadre de l'invention. En effet, chacune des opérations décrites figures 12 et 13 est aisément transposable dans le cas où un tel traitement est opéré sur des signaux convertis en mode numérique.

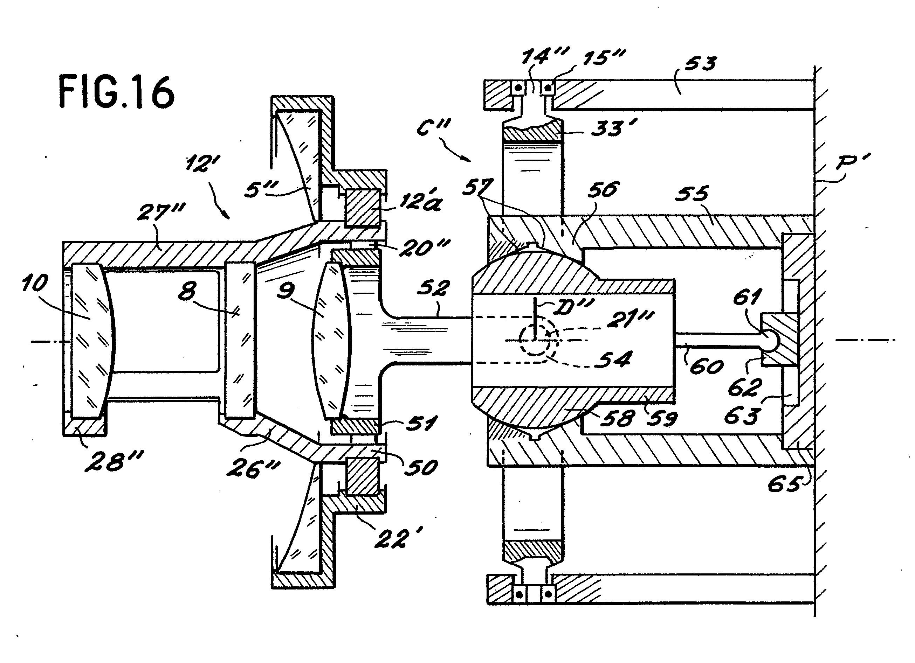

Les figures 15a et 15b représentent des variantes de réseaux de détecteurs suivant l'invention.

La figure 15a représente un réseau linéaire de détecteurs comportant un détecteur central $D'_1$ disposé sur l'axe de rotation des éléments optiques cylindriques. Les détecteurs suivants $D'_2$ ... $D'_p$ sont de dimensions et de pas croissant au fur et à mesure qu'on s'éloigne du détecteur $D'_1$. Dans le cas où le dispositif est utilisé essentiellement comme dispositif de visée, la résolution est ainsi fine au centre du champ et relativement grossière en bord de champ.

La figure 15b montre un réseau de détecteurs associant deux types de réseaux linéaires, à savoir une première série de détecteurs $D_1$, $D_2$, ... $D_n$ répartis radialement suivant un pas constant, auquel est associé un réseau de détecteurs $D'_1$, $D'_2$ etc. D'P tels que représentés à la figure 15a. Sur l'exemple représenté à la figure 15b, les détecteurs $D_1$ et $D'_1$ sont identiques. Les deux réseaux de détecteurs font entre eux un angle δ. Les réseaux linéaires peuvent être sensibles dans des bandes spectrales différentes.

L'utilisation de réseaux de détecteurs comprenant une pluralité de détecteurs comporte l'inconvénient, lorsque ceux-ci sont portés par le stator d'un gyroscope, de présenter de nombreuses sorties par exemple fil d'alimentation, fils porteurs de signaux, circuits de refroidissements des détecteurs, etc., qui introduisent une précession dans le mouvement de rotation de la toupie du rotor, et par conséquent, peuvent entraîner une erreur de visée.

Par référence à la figure 16, on a représenté un mode de réalisation où, le dispositif de détection est découplé du gyroscope.

Une suspension à la cardan représentée par le repère général C″ comporte un manchon 53 solidaire d'un plan de référence P″. Le manchon 53 porte un axe 14″ en deux parties qui est libre en rotation grâce à des roulements 15″. Une couronne 33′ est solidaire de l'axe 14″. La couronne 33′ porte un axe 21″ en deux parties et qui est rendue libre en rotation par rapport à la couronne 33′ par des roulements non représentés. L'axe 21″ en deux parties est solidaire d'une paire de tiges de couplage 52 qui se prolonge vers l'avant par une bague 51 maintenant la lentille convergente 9 et coopérant avec un roulement 20″ d'un rotor 12′.

Le rotor 12′ comporte une partie cylindrique 50 coopérant avec le roulement 20″ et supportant une toupie 12′a et un miroir principal 5″. La toupie 12′a et le miroir principal 5″ sont maintenus par un ensemble de retenue 22′. La partie cylindrique 50 se prolonge vers l'avant par un cône de raccordement 26″ jusqu'à une lentille cylindrique sertie 8. Le cône de raccordement 26″ se prolonge par des bras 27″ qui portent un miroir cylindrique 10 par l'intermédiaire d'une bague de sertissage 28″.

Un réseau de détecteurs D″ perpendiculaire à l'axe du dispositif de détection est solidaire d'une rotule 58 articulée par un double profil tronconique 57 ménagé dans la partie avant 56 d'un manchon 55 solidaire du plan P″. Le centre de rotation de la rotule 58 est préférentiellement le point d'intersection des deux axes 14″ et 21″ du cardan C″. La rotule 58 se prolonge par un manchon arrière 59 portant une tige 60 pourvue d'une rotule 61 et présentant un débattement axial. La rotule 61 est solidaire d'un support de moteur linéaire 62 appelé à coulisser dans une rainure 63 suivant un premier axe. La rainure 63 est ménagée dans une tête mobile 65, ou qui est amenée à se déplacer selon un axe perpendiculaire à l'axe de la rainure 63 grâce à un moteur linéaire.

Les moteurs linéaires sont asservis par un dispositif de recopie de la position de l'axe optique du dispositif ou axe de visée qui est constitué par l'axe de rotation du rotor 12′, et par un dispositif de recopie de l'axe du dispositif de détection qui est l'axe de la rotule 58 et du manchon 59. Les signaux représentatifs de l'écart angulaire des deux axes sont introduits de manière appropriée dans des circuits d'asservissement correspondant à chacun des moteurs linéaires.

On peut utiliser avantageusement à cet effet des dispositifs de recopie et d'asservissement tels que ceux utilisés dans les auto-directeurs de missiles et qui ont pour fonction de rattraper tout écart angulaire entre l'axe de visée, qui est l'axe optique du système monté sur gyroscope, et l'axe du missile. On asservit ainsi l'axe du dispositif de détection à rester parallèle à l'axe de rotation du rotor 12′, c'est-à-dire l'axe de visée, et donc le réseau de détecteurs D″ à rester perpendiculaire audit axe de visée. Une précision de l'ordre de degré d'angle est obtenue sans difficulté et est suffisante.

L'invention s'applique particulièrement aux auto-directeurs de missiles, et permet ainsi une reconstruction fine de l'image vidéo d'une cible, notamment en vidéo infra-rouge.

## Revendications

1. Dispositif opto-électronique d'analyse d'images vidéo-fréquence comportant des éléments optiques entraînés en rotation de manière à produire un balayage d'image, une optique de focalisation (F) sur un dispositif de détection comprenant un réseau de détecteurs (D) et des moyens vidéo-fréquence de traitement des signaux des détecteurs (D), caractérisé en ce que les éléments optiques entraînés en rotation consistent en un système afocal comprenant au moins deux éléments optiques cylindriques (1, 2, 7, 8, 10) entraînés solidairement en rotation autour d'un axe perpendiculaire (XX') au plan de leurs génératrices (3, 4) et définissant l'axe optique du dispositif et en ce que le réseau de détecteurs (D) comprend une pluralité de détecteurs ($D_1$ ... $D_n$, $D'_1$ ... $D'_n$) s'étendant radialement depuis ledit axe perpendiculaire, l'un d'entre eux étant centré sur ledit axe.

2. Dispositif suivant la revendication 1, caractérisé en ce que lesdits deux éléments optiques cylindriques (1, 2, 7, 8, 9, 10) ont leurs distances focales égales.

3. Dispositif suivant l'une des revendications 1 ou 2, caractérisé en ce que lesdits éléments optiques cylindriques sont deux lentilles cylindriques (1, 2, 7, 8) de génératrices parallèles.

4. Dispositif suivant la revendication 3, caractérisé en ce qu'il comporte un moyen de réception optique constitué par un miroir primaire (5) ou une lentille convergente (11) muni d'une ouverture axiale, et un miroir sphérique secondaire (6) et réalisant un renvoi vers lesdites lentilles cylindriques.

5. Dispositif selon l'une des revendications 1 ou 2, caractérisé en ce que lesdits éléments optiques cylindriques sont constitués par un miroir cylindrique (10) et une lentille cylindrique (8) dont les génératrices sont orthogonales.

6. Dispositif selon la revendication 5, caractérisé en ce qu'il comporte un moyen de réception optique constitué par un miroir (5) ou une lentille sphérique (11) pourvu d'une ouverture axiale et réalisant un renvoi vers ledit miroir cylindrique.

7. Dispositif suivant l'une quelconque des revendications précédentes, caractérisé en ce qu'il est incorporé à une tête stabilisée par un gyroscope comprenant une suspension à la cardan (C, C'), un stator (19, 71) mobile autour des deux axes (14, 21) de la suspension à la Cardan (C, C') et un rotor (12, 19) tournant par rapport au stator (19, 71) et dont l'axe de rotation définit l'axe optique du dispositif, en ce que les éléments optiques cylindriques (1, 2, 7, 8, 10) sont solidaires du rotor (12, 29) et en ce que le dispositif de détection (D) est solidaire du stator (19, 71).

8. Dispositif suivant l'une quelconque des revendications 1 à 6, caractérisé en ce qu'il est incorporé à une tête stabilisée par un gyroscope comprenant une suspension à la cardan (C''), un stator (51) mobile autour des deux axes (14, 21) de la suspension à la Cardan (C'') et un rotor (12') tournant par rapport au stator et dont l'axe de rotation définit l'axe optique du dispositif, en ce que les éléments optiques cylindriques (1, 2, 7, 8, 10) sont solidaires du rotor (12') et en ce que le dispositif de détection est découplé du stator (51) et est asservi à rester d'axe parallèle à l'axe optique.

9. Dispositif suivant la revendication 8, caractérisé en ce que le dispositif de détection est mobile en rotation autour du point d'intersection des deux axes (14, 21) de la suspension à la cardan (C''), en ce qu'il est solidaire d'une rotule (61) asservie à suivre un déplacement suivant deux axes orthogonaux, le déplacement étant produit par des moteurs recevant, par l'intermédiaire de dispositifs de recopie de la position de l'axe de visée et de celui du dispositif de détection, des signaux représentatifs de l'écart angulaire existant entre les axes de visée et l'axe du dispositif de détection.

10. Dispositif suivant l'une quelconque des revendications précédentes, caractérisé en ce que les moyens de traitement vidéo-fréquence comportent un circuit de multiplexage et de codage numérique (MN) des signaux fournis par le réseau de détecteurs (D), un circuit de transcription et de synchronisation (Q, 45, 46) faisant correspondre séquentiellement à chaque paire de coordonnées polaires ($\rho$, $\theta$) une paire de coordonnées cartésiennes (X, Y), et une mémoire (M) recevant séquentiellement les valeurs mesurées et leurs adresses selon lesdites coordonnées cartésiennes (X,Y).

11. Dispositif suivant l'une quelconque des revendications précédentes, caractérisé en ce que les moyens vidéo-fréquence de traitement comportent une mémoire ($M_v$) de stockage des valeurs des signaux fournis dans des conditions de référence par chaque détecteur et amplifiées par un circuit amplification, et un circuit soustracteur (CS) qui retranche lesdites valeurs de celles correspondant à une détection d'image, ce qui permet de compenser des dérives dues aux entrées des circuits d'amplification.

12. Dispositif suivant l'une quelconque des revendications précédentes, caractérisé en ce que les moyens vidéo-fréquence de traitement comportent un circuit moyenneur (48) recevant les tensions représentatives des signaux fournis par chaque détecteur et produisant à sa sortie la valeur moyenne de ceux-ci, et un soustracteur qui retranche ladite valeur moyenne de chaque tension représentative des signaux fournis par chaque détecteur.

13. Dispositif suivant la revendication 12, caractérisé en ce qu'il comporte un intégrateur (49) recevant à son entrée ladite valeur moyenne et en ce que la sortie dudit intégrateur est reliée à l'entrée dudit circuit soustracteur.

14. Dispositif suivant l'une des revendications 12 ou 13, caractérisé en ce que le circuit moyenneur comprend un réseau de résistances ($R_1$, $R_2$, ... $R_n$), comportant une borne commune M, chaque résistance recevant à son autre borne ($S_1$, $S_2$, ... $S_n$) une tension représentative d'un signal fourni par un détecteur, un condensateur ($C_1$)

relié à la borne commune et à la masse et une liaison entre la borne commune et l'entrée d'un amplificateur (49), et en ce que le soustracteur comprend une boucle de contre-réaction réinjectant ladite valeur moyenne V̄ à l'entrée de chacun des circuits d'amplification correspondant à chaque détecteur.

15. Dispositif suivant l'une quelconque des revendications précédentes, caractérisé en ce que le réseau de détecteurs comporte au moins une barrette de détecteurs de pas et de dimensions différentes.

16. Dispositif suivant l'une quelconque des revendications précédentes, caractérisé en ce que le détecteur est constitué de plusieurs barrettes de détecteurs de sensibilités spectrales différentes.

## Claims

1. Optoelectronic device for the analysis of video frequency images comprising optical elements which are entrained in rotation so as to produce an image scan, an optical system (F) for focusing on a detection device comprising an array of detectors (D) and video frequency means for processing the signals of the detectors (D), characterized in that the optical elements entrained in rotation consist of an afocal system including at least two optical cylindrical elements (1, 2, 7, 8, 10) entrained fixed in rotation with each other about an axis (XX') perpendicular to the plane of their generatrices (3, 4) and defining the optical axis of the device, and in that the array of detectors (D) comprises a plurality of detectors $(D_1 \ldots D_n, D'_1 \ldots D'_n)$ extending radially from said perpendicular axis, one of them being centered on said axis.

2. Device according to claim 1, characterized in that said two cylindrical optical elements (1, 2, 7, 8, 9, 10) have equal focal lengths.

3. Device according to one of claims 1 or 2, characterized in that said optical cylindrical elements are two cylindrical lenses (1, 2, 7, 8) with parallel generatrices.

4. Device according to claim 3, characterized in that it comprises an optical receiving lens which is formed by a primary mirror (5) or a convergent lens (11) equipped with an axial opening, and a secondary spherical mirror (6) effecting a reflection back to said cylindrical lenses.

5. Device according to one of claims 1 or 2, characterized in that said optical cylindrical elements are formed by a cylindrical mirror (10) and a cylindrical lens (8) of which the generatrices are orthogonal.

6. Device according to claim 5, characterized in that it comprises an optical receiving means which is formed by a spherical mirror (5) or a spherical lens (11) provided with an axial opening and effecting a reflection back to said cylindrical mirror.

7. Device according to any one of the preceding claims, characterized in that it is incorporated in a head stabilized by a gyroscope comprising a cardan suspension (C, C'), a stator (19, 71) movable about the two axes (14, 21) of the cardan suspension (C, C') and a rotor (12, 19) which rotates with respect to the stator (19, 71) and the axis of rotation of which defines the optical axis of the device, that the optical cylindrical elements (1, 2, 7, 8, 10) are fixedly connected to the rotor (12, 29) and that the detection device (D) is fixedly connected to the stator (19, 71).

8. Device according to any one of claims 1 to 6, characterized in that it is incorporated in a head stabilized by a gyroscope comprising a cardan suspension (C''), a stator (51) movable about the two axes (14, 21) of the cardan suspension (C'') and a rotor (12') which rotates with respect to the stator and the axis of rotation of which defines the optical axis of the device, that the optical cylindrical elements (1, 2, 7, 8, 10) are fixedly connected to the rotor (12') and that the detection device is decoupled from the stator (51) and is controlled to retain an axis parallel to the optical axis.

9. Device according to claim 8, characterized in that the detection device is rotationally movable about the intersection point of the two axes (14, 21) of the cardan suspension (C''), that it is fixedly connected to a joint ball (61) controlled to follow a displacement along two orthogonal axes, the displacement being produced by motors receiving by way of devices for simulating the position of the target axis and that of the detection device signals representing the angular deviation existing between the target axis and the axis of the detection device.

10. Device according to any one of the preceding claims, characterized in that the video frequency processing means comprise a circuit for multiplexing and digital coding (MN) of the signals supplied by the array of detectors (D), a transcription and synchronization circuit (Q, 45, 46) causing a pair of cartesian coordinates (X, Y) to correspond sequentially to each pair of polar coordinates $(\rho, \theta)$, and a memory (M) sequentially receiving the measured values and their addresses according to said cartesian coordinates (X, Y).

11. Device according to any one of the preceding claims, characterized in that the video frequency processing means comprise a memory $(M_v)$ for storing the signal values supplied under reference conditions by each detector and amplified by an amplification circuit, and a subtraction circuit (CS) which deducts said values from those corresponding to an image detection, thereby permitting compensation of drifts due to the inputs of the amplification circuits.

12. Device according to any one of the preceding claims, characterized in that the video frequency processing means comprise an averaging circuit (48) receiving the voltages representing the signals supplied by each detector and producing at its ouput the mean value thereof, and a subtractor which deducts said mean value from each voltage representing the signals supplied by each detector.

13. Device according to claim 12, characterized in that it comprises an integrator (49) receiving at its input said mean value and in that the output of said integrator is connected to the input of said subtractor circuit.

14. Device according to one of claims 13 or 14, characterized in that the averaging circuit comprises a network of resistors ($R_1$, $R_2$, ... $R_n$) having a common terminal (M), each resistor receiving at its other terminal ($S_1$, $S_2$, ... $S_n$) a voltage representing a signal supplied by a detector, a capacitor ($C_1$) connected to the common terminal and to ground and a connection between the common terminal and the input of an amplifier (49), and in that the subtractor comprises a feedback loop feeding said mean value $\bar{V}$ back to the input of each of the amplification circuits corresponding to each detector.

15. Device according to any one of the preceding claims, characterized in that the array of detectors comprises at least one line of detectors of different pitch and dimensions.

16. Device according to any one of the preceding claims, characterized in that the detector is formed by several lines of detectors of different spectral sensitivities.

**Ansprüche**

1. Optoelektronische Vorrichtung zur Analyse von videofrequenten Bildern, mit optischen Elementen, die derart in Drehung versetzt werden, daß eine Bildabtastung erreicht wird, einer Optik (F) zur Fokussierung auf einer Detektionsvorrichtung, die eine Gruppe von Detektoren (D) umfaßt, und videofrequenten Mitteln zur Verarbeitung der von den Detektoren (D) abgegebenen Signale, dadurch gekennzeichnet, daß die optischen Elemente, die in Drehung versetzt werden, aus einem afokalen System bestehen, das wenigstens zwei optische Zylinderelemente (1, 2, 7, 8, 10) umfaßt, welche drehfest miteinander verbunden um eine Achse (XX') in Drehung versetzt werden, die senkrecht zur Ebene ihrer Generatrixlinien (3, 4) ist und die optische Achse der Vorrichtung definiert, und daß die Gruppe von Detektoren (D) eine Mehrzahl von Detektoren ($D_1$ ... $D_n$, $D'_1$ ... $D'_n$) enthält, die sich radial von der genannten senkrechten Achse ausgehend erstrecken, wobei einer von ihnen auf dieser Achse zentriert ist.

2. Vorrichtung nach Anspruch 1, dadurch gekennzeichnet, daß die beiden optischen Zylinderelemente (1, 2, 7, 8, 9, 10) einander gleiche Brennweiten aufweisen.

3. Vorrichtung nach Anspruch 1 oder 2, dadurch gekennzeichnet, daß die optischen Zylinderelemente zwei Zylinderlinsen (1, 2, 7, 8) mit parallelen Generatrixlinien sind.

4. Vorrichtung nach Anspruch 3, dadurch gekennzeichnet, daß sie eine optische Empfangseinrichtung umfaßt, die durch einen primären Spiegel (5) oder eine Konvergenzlinse (11) gebildet ist, welche mit einer axialen Öffnung versehen ist, und einen sekundären sphärischen Spiegel (6) umfaßt, der zu den Zylinderlinsen zurückreflektiert.

5. Vorrichtung nach Anspruch 1 oder 2, dadurch gekennzeichnet, daß die optischen Zylinderelemente aus einem zylindrischen Spiegel (10) und einer Zylinderlinse (8) gebildet sind, deren Generatrixlinien orthogonal sind.

6. Vorrichtung nach Anspruch 5, dadurch gekennzeichnet, daß sie eine optische Empfangseinrichtung umfaßt, die aus einem sphärischen Spiegel (5) oder einer sphärischen Linse (11) gebildet ist, in deren Mitte eine axiale Öffnung vorgesehen ist und die zu dem genannten zylindrischen Spiegel zurückreflektieren.

7. Vorrichtung nach einem der vorstehenden Ansprüche, dadurch gekennzeichnet, daß sie in einen Kopf eingebaut ist, der durch ein Kreiselgerät stabilisiert ist, welches eine Kardanaufhängung (C, C'), einen Stator (19, 71), welcher um die zwei Achsen (14, 21) der Kardanaufhängung (C, C') beweglich ist, und einen Rotor (12, 19) umfaßt, welcher in bezug auf den Stator (19, 71) rotiert und dessen Rotationsachse die optische Achse der Vorrichtung festlegt, daß die optischen Zylinderelemente (1, 2, 7, 8, 10) mit dem Rotor (12, 29) fest verbunden sind und daß die Detektionsvorrichtung (D) mit dem Stator (19, 71) fest verbunden ist.

8. Vorrichtung nach einem der Ansprüche 1 bis 6, dadurch gekennzeichnet, daß sie in einen Kopf eingebaut ist, der durch ein Kreiselgerät stabilisiert ist, welches eine Kardanaufhängung (C''), einen Stator (51), der um die zwei Achsen (14, 21) der Kardanaufhängung (C'') beweglich ist, und einen Rotor (12') umfaßt, der in bezug auf den Stator rotiert und dessen Rotationsachse die optische Achse der Vorrichtung festlegt, daß die optischen Zylinderelemente (1, 2, 7, 8, 10) mit dem Rotor (12') fest verbunden sind und daß die Detektionsvorrichtung von dem Stator (51) entkoppelt und derart nachgeführt ist, daß sie eine zur optischen Achse parallele Achse beibehält.

9. Vorrichtung nach Anspruch 8, dadurch gekennzeichnet, daß die Detektionsvorrichtung drehbeweglich um den Schnittpunkt der beiden Achsen (14, 21) der Kardanaufhängung (C'') ist, daß sie fest mit einer Gelenkkugel (61) verbunden ist, die einer Bewegung entlang zwei orthogonalen Achsen nachgeführt ist, wobei die Bewegung durch Motoren verursacht wird, die über Vorrichtungen zur Nachbildung der Lage der Zielachse und der der Detektionsvorrichtung Signale empfangen, welche die Winkelablage zwischen der Zielachse und der Achse der Detektionsvorrichtung repräsentieren.

10. Vorrichtung nach einem der vorstehenden Ansprüche, dadurch gekennzeichnet, daß die videofrequenten Verarbeitungsmittel einen Schaltkreis zur Multiplexierung und digitalen Codierung (MN) der von der Gruppierung von Detektoren (D) gelieferten Signale, eine Umschreibungs- und Synchronisationsschaltung (Q, 45, 46), die sequentiell eine Entsprechung zwischen zwei kartesischen Koordinaten (X, Y) und jedem Polarkoordinatenpaar ($\rho$, $\theta$) herbeiführt, und einen Speicher (M) enthalten, der sequentiell die gemessenen Werte und ihre Adressen in den kartesischen Koordinaten (X, Y) empfängt.

11. Vorrichtung nach einem der vorstehenden Ansprüche, dadurch gekennzeichnet, daß die videofrequenten Verarbeitungsmittel einen Speicher ($M_v$) zum Speichern der Signalwerte umfassen, die unter Referenzbedingungen durch jeden Detektor geliefert und durch eine Verstärkerschaltung verstärkt werden, sowie eine Subtraktionsschaltung (CS) umfassen, welche die genannten Werte von denjenigen abzieht, die einer Bilddetektion entsprechen, wodurch es ermöglicht wird, Abdriften zu kompensieren, die auf die Eingänge der Verstärkerschaltungen zurückzuführen sind.

12. Vorrichtung nach einem der vorstehenden Ansprüche, dadurch gekennzeichnet, daß die videofrequenten Verarbeitungsmittel eine Mittelungsschaltung (48) umfassen, welche die Spannungen empfängt, die die von jedem Detektor gelieferten Signale darstellen, und an ihrem Ausgang den Mittelwert derselben erzeugt, sowie einen Subtrahierer umfassen, der den genannten Mitellwert von jeder Spannung abzieht, welche die von jedem Detektor gelieferten Signale darstellt.

13. Vorrichtung nach Anspruch 12, dadurch gekennzeichnet, daß sie einen Integrator (49) umfaßt, der an seinem Eingang den genannten Mittelwert empfängt, und daß der Ausgang dieses Integrators mit dem Eingang der Subtrahierschaltung verbunden ist.

14. Vorrichtung nach Anspruch 12 oder 13, dadurch gekennzeichnet, daß die Mittelungsschaltung ein Netzwerk von Widerständen ($R_1$, $R_2$, ... $R_n$) umfaßt, die einen gemeinsamen Anschluß (M) aufweisen, wobei jeder Widerstand an seinem anderen Anschluß ($S_1$, $S_2$, ... $S_n$) eine Spannung empfängt, welche ein von einem Detektor geliefertes Signal darstellt, einen mit dem gemeinsamen Anschluß und mit Masse verbundenen Kondensator ($C_1$) sowie eine Verbindung zwischen dem gemeinsamen Anschluß und dem Eingang eines Verstärkers (49) umfaßt und daß der Subtrahierer eine Gegenkopplungsschleife enthält, die den genannten Mittelwert $\bar{V}$ in den Eingang jeder Verstärkerschaltung zurückspeist, die jeweils einem Detektor entspricht.

15. Vorrichtung nach einem der vorstehenden Ansprüche, dadurch gekennzeichnet, daß die Gruppierung von Detektoren wenigstens eine Zeile von Detektoren umfaßt, deren Teilung und Abmessungen unterschiedlich sind.

16. Vorrichtung nach einem der vorstehenden Ansprüche, dadurch gekennzeichnet, daß der Detektor aus mehreren Detektorzeilen mit verschiedenen spektralen Empfindlichkeiten gebildet ist.

0 050 546

FIG.1

FIG.2a

FIG.2b

FIG.3b

FIG.3a

FIG.4

FIG.15a

FIG.15b

2

FIG.5a

FIG.5b

FIG.6 a

FIG.6 b

FIG.7a

FIG.7b

FIG.8

0 050 546

FIG.9

FIG.10

FIG.11

# FIG.12

# FIG.13

# FIG.14 b

# FIG.14 a

# FIG.16

0 050 546